# EUROPEAN PATENT APPLICATION

(11) **EP 1 013 492 A1**
(43) Date of publication of application: **28.06.2000**
(21) Application number: 99106203.5
(22) Date of filing: 13.04.1999
(51) Int. Cl.: B60J 1/00

(54) **Shock-resistant window for automotive vehicles**

(30) Priority: 23.12.1998 AR 9806641; 23.12.1998 AR 9806642
(71) Applicant: Pigni, Oscar Marcelo, 1426 Buenos Aires (AR)
(72) Inventor: Pigni, Oscar Marcelo, 1426 Buenos Aires (AR)
(74) Representative: Fernandez Lerroux, Aurelio

(57) **Abstract**

This type of windows, whether fixed or mobile, can replace the crystal windows, because they provide anti-delinquency safety against blows (NOT FROM FIREARMS); moreover, they reduce the economic losses produced at the automobile terminals caused by ordinary crystal cracking when being installed in vehicles.

Furthermore, they allow power saving at the vehicle, as regards air conditioner and heater, due to their high thermal insulation. Their ultraviolet ray filter prevents the sunlight from toning down the seat cover and the carpets in the vehicle interior, when such vehicle is exposed to sunlight for long periods of time. Moreover, they do not get blurred during low temperature or rainy days, because they do not cool down as ordinary crystals do, and there is no water condensation caused by temperature differences between the vehicle interior and exterior
Therefore, automotive vehicles may dispense with blur removers by air and with electric resistance at the rear window. Besides, these windows are particularly more acoustic than ordinary crystal windows, thus allowing the vehicle cabin to isolate even more from the environment noises

They have undergone an anti-abrasive treatment, on both sides of the windows, thus preventing them from getting scratched due to cleaning or environment abrasion.

## Description

These windows are composed of polycarbonate material, and they may have as many shapes as automotive vehicles exist.

If they are mobile, the "C.G.P" (Curvature Guiding Profile) retains them in their perimeter. The Curvature Guiding Profile's function is to guide and to keep the curvature of the shock-resistant polycarbonate windows for automotive vehicles. These windows could not be curved, by way of thermal forming because such process would break the UV filter coat and the anti-abrasion coat already applied. Furthermore, due to the windows fine thin thickness, its structure would not be so firm.

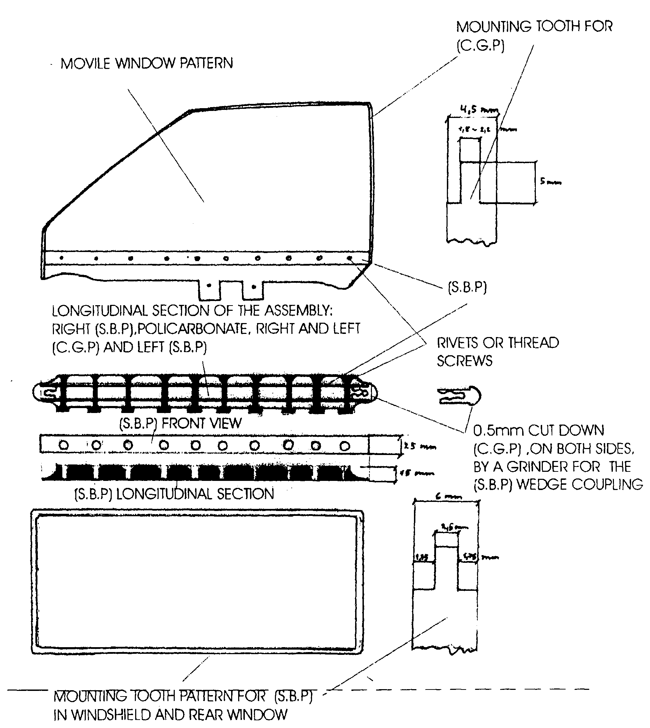

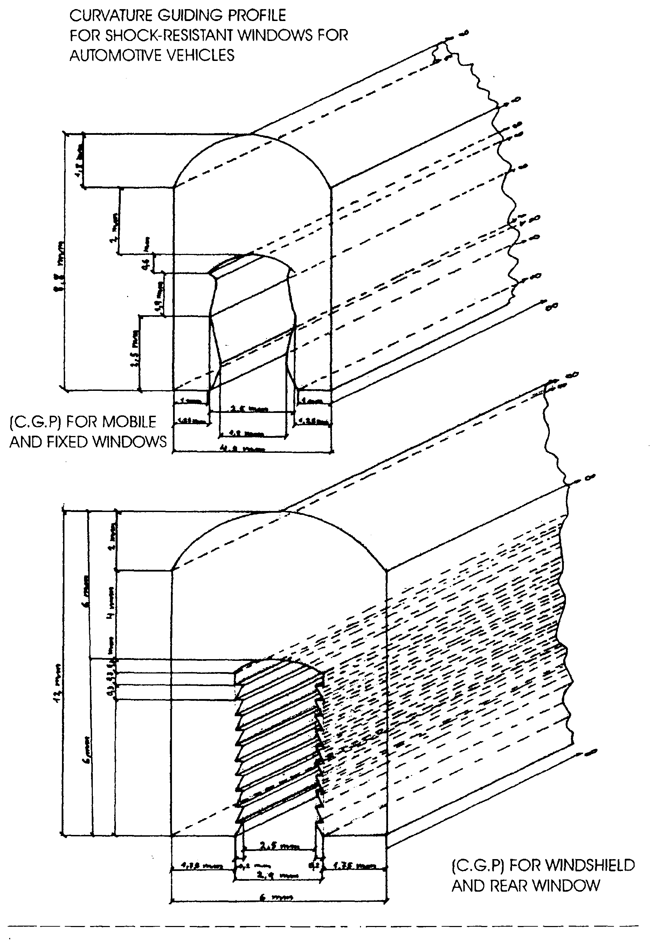

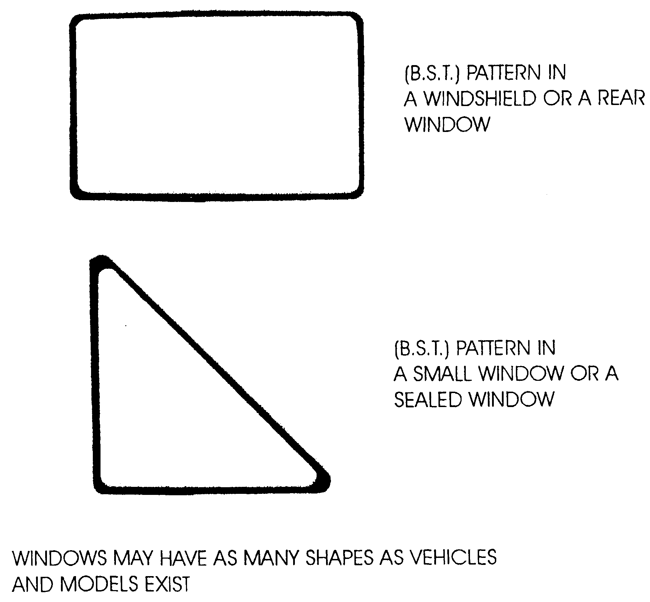

For rear windows or windshields, a (C.G.P.) must be used as well as a 6mm-thickness polycarbonate in the shape and measures as indicated in the figure.

For mobile windows, we must use a (C.G.P.) of 4.5 mm, 6.00 mm or 9.5 mm thickness depending on the window surface.

The (C.G.P.) runs and it is deposited inside the slides located at the doors, top of the trunk, roof or interior floor of the automotive vehicles.

If windows are fixed, they may or not contain the (C.G.P.) profile, if the automotive vehicle model so requires.

This type of windows, whether fixed or mobile, can replace the crystal windows, because they provide anti-delinquency safety against blows (NOT FROM FIREARMS); moreover, they reduce the economic losses produced at the automobile terminals caused by ordinary crystal cracking when being installed in vehicles.

Furthermore, they allow power saving at the vehicle, as regards air conditioner and heater, due to their high thermal insulation. Their ultraviolet ray filter prevents the sunlight from toning down the seat cover and the carpets in the vehicle interior, when such vehicle is exposed to sunlight for long periods of time. Moreover, they do not get blurred during low temperature or rainy days, because they do not cool down as ordinary crystals do, and there is no water condensation caused by temperature differences between the vehicle interior and exterior.

Therefore, automotive vehicles may dispense with blur removers by air and with electric resistance at the rear window. Besides, these windows are particularly more acoustic than ordinary crystal windows, thus allowing the vehicle cabin to isolate even more from the environment noises.

They have undergone an anti-abrasive treatment, on both sides of the windows, thus preventing them from getting scratched due to cleaning or environment abrasion.

Fixed windows have a B.S.T (black serigraphic tape) on one side of the window - the one on the vehicle body side - and also on the windshields or rear windows which painting is made by way of a serigraphic or self-adhesive method. Such black serigraphic tape allows the glue between the vehicle body and the polycarbonate to stick, thus covering up the glue deformation for aesthetic purposes.

The (C.G.P) is made up of an alloy of different metals. Such alloy allows that the profile may be tempered between 10 and 12 Webster, and that it may also be voluntarily untempered with a gas blowpipe in order to curve it.

The (C.G.P.) manufacturing process is as follows: The aluminum along with the metals are melted down in a furnace in the amounts as specified in the Statement of Possession No.1 of this patent, then the alloy is poured into a cylindrical receptacle until it gets cooled.

The billet (cooled alloy without the receptacle) is placed with the shape and measures of each (C.G.P) in the press where the matrix is located.

The billet must be heated at 500° C inside the press, and it must be pushed so that it may pass through the matrix. Consequently, a 6-m long (C.G.P) will come out from the other side of the matrix.

In order to temper it and to reach the pre-established hardening, it must be placed in a furnace during 5 hours at 195° C. Once it gets cooled, it is ready to be installed in the window in its natural aluminum color; for aesthetic purposes, it may be painted in another color.

The fixed window manufacturing process is the following: The polycarbonate plate must be used without the anti-scratching treatment or the ultraviolet filter treatment. The plate must be cut with a Gerber or a Sabre branded router or a similar one, and then it must be thermally formed to obtain the required curvature, should the window model so requires; then the serigraphic black painting or the self-adhesive tape must be applied to the window perimeter as indicated in the figures.

Once the serigraphic painting or the glue of the tape gets dry, another similar tape is applied over either of those tapes, but with an easy-unsticking traceless glue.

This protection tape will prevent the ultraviolet filter treatment coats and the anti-abrasion treatment coats from sticking to the B.S.T that is located under such protection tape, when the window is submerged into the tub.

In order to carry out these treatments, the window must be submerged into a tub containing the solution to be applied, the UV filter treatment and the anti-abrasion treatment. The tub must be placed in a dustless environment in order to avoid that dust particles or other foreign elements might stick to the treatment coats.

The manufacturing process for mobile windows: The window shape must be cut with a Router (Sabre - model 408 T-Vac Gerber or a similar one), over the polycarbonate plate, type (Lexan MR-10 General Electric Inc.) which has already undergone the anti-abrasion and UV filter treatments, being the surface smaller than the height, from the interior chute up to the maximum height of the (C.G.P.) exterior. (See figure and specifications).

The (C.G.P) is assembled under pressure, on the cut down tooth along the window perimeter. Moreover, a 1 mm cut down must be done over the window base, in both sides of the polycarbonate, where the (S.B.P) Sandwich Base Plates will be located; this must be done with the router within the planned cutting of the polycarbonate plate.

It must be started from the hidden side inside the door, when the window is shut. An aluminum rivet must be placed at the beginning of the installation and another one at the end, embracing the (C.G.P) with the window tooth located inside the chute as a sandwich.

The Sandwich Base Plates (S.B.P.) are located on the window base, on the unseen side of the door. The polycarbonate is located between two stainless steel or galvanized iron plates as a sandwich, these plates are fastened by rivets from one plate to the other, being the polycarbonate placed in the middle of such plates. On each top of the (S.B.P), there is a curved wedge that is run inside the door slides by both the (S.B.P) and the profile with the same thickness as that of the window. Galvanized iron or stainless steel is used so that the plates do not rust when water is dropped inside the door. The (S.B.P) provide the (C.G.P) with firmness and rigidity; the holes required for the window fastening, for the upward and downward window moving system may be incorporated into such base plates, only in the case of mobile windows.

A silicone sealer must be placed on a proportional basis, which is coupled with the tooth along the perimeter; just 5 cm before making a curve, the sealer must be placed over the tooth, but not over the profile.

In order to curve the (C.G.P), it should be untempered by heating it with a gas blowpipe 5 cm before reaching the curve.

Once the coupling between the profile and the tooth along almost the entire perimeter has been finished, the wrinkled curves must be leaned on an anvil, where the profile has been bent and they must be flattened with a hammer so as to give them the same thickness level that the profile and polycarbonate have.

In order to curve the window, the window along with the profile must be passed through a compression roller or must be curved over a 40-cm diameter cylinder which exterior surface is covered by a cloth soft to the touch in order to prevent the polycarbonate from getting scratched and to allow the polycarbonate to slide easily when curving.

The curving must be performed before the sealer becomes completely dry.

The beginning and the end of the (C.G.P) must be passed through a grinder and must be cut down in 1mm on each side of the curvature guiding profile. The (S.B.P.) wedge containing the (C.G.P.) and the polycarbonate must be leaned on such cut.

As regards fixed windows, which do not need to be curved, the tooth goes over the entire perimeter whereas in the case of mobile windows the tooth goes over almost the entire perimeter.

In mobile windows, the tooth is located in the (C.G.P.). As regards fixed windows, the tooth is located inside the perimetrical rubber joint of the window, in the vehicle body.

Once the window has been installed in the car, the self-adhesive paper protection provided by the manufacturer must be removed by starting from all sides of the figure towards its center.

Once the paper protection has been removed, the window must be cleaned using some of the cleaners recommended by the polycarbonate manufacturer, and an Auri teflon coat must be passed over the entire window surface, on both sides of the window, in order to prevent the environment dust and the snow from sticking to the window and to allow the water to slide easily when it rains, thus obtaining a better visibility.

Graphite powder or liquid vaseline must be placed in the slides in order to obtain a better sliding of the mobile window inside the slides.

## Claims

Having my invention been already described and by bringing it into practice, I hereby state possession of my exclusive right.

1. Window, windshield and rear window material:
Light-green or translucent black transparent compact polycarbonate (Lexan MR-10 General Electric Inc.).
Thickness may vary from 3 mm to 9.5 mm depending on the window surface to be covered so as to provide more resistance to blows.
The black serigraphic tape consists of black not translucent synthetic painting and the self-adhesive tape consists of black vinyl and has a contact cement with high adhesion to traction - type (3m - Scotch).
The sandwich base plates (S.B.P) are made up of stainless steel or galvanized iron.
The teflon is liquid (Dupont or Auri Shield for crystals).
Graphite powder or liquid or pasty vaseline.
The UV filter treatment allowing the beams of light to pass through easily and resistant to anti-abrasion, solvents, thermal is (PHC587) HARDCOATS FROM GENERAL ELECTRIC INC.
The (C.G.P) material consists of an alloy between aluminum and other metals which I will describe hereinbelow; these metals, in their respective amounts and considering the limits provide the (C.G.P) with a 10 to 12 Webster hardening.
The following elements must be added to the aluminum in the amounts described as follows:
Si 0.2∼0.6%
Fe Maximum 0.35%
Cu Maximum 0.10%
Mn Maximum 0.10%
Mg 0.45 ∼ 0.9%
Cr Maximum 0.10%
Zn Maximum 0.10%
Ti Maximum 0.10%
The following elements should not exceed the maximum of 0.15%
V + Ti Maximum 0.02%
B Maximum 0.05%
Ga Maximum 0.03%
The Pb and Bi should be kept in equal amounts
Pb 0.2 ∼ 0.0%
Bi 0.2 ∼ 0.0%
